# EUROPEAN PATENT SPECIFICATION

(11) **EP 3 410 218 B1**
(45) Date of publication and mention of the grant of the patent: **11.05.2022**
(21) Application number: 18172821.3
(22) Date of filing: 17.05.2018
(51) Int. Cl.: G03G 15/00

(54) **CONTROL APPARATUS AND CONTROL METHOD FOR CONTROLLING AN IMAGE FORMING SYSTEM, AND STORAGE MEDIUM**
STEUERUNGSVORRICHTUNG UND STEUERUNGSVERFAHREN UND SPEICHERMEDIUM ZUR STEUERUNG EINES BILDERZEUGUNGSSYSTEMS
APPAREIL DE COMMANDE ET PROCÉDÉ DE COMMANDE D'UN SYSTÈME DE FORMATION D'IMAGES ET SUPPORT DE STOCKAGE

(30) Priority: 22.05.2017 JP 2017101133; 26.01.2018 JP 2018011270
(43) Date of publication of application: 05.12.2018
(73) Proprietor: CANON KABUSHIKI KAISHA, Ohta-ku Tokyo 146-8501 (JP)
(72) Inventor: FUKUDA, Shin, Tokyo, 146-8501 (JP)
(74) Representative: TBK

(56) References cited:
- US-A1- 2005 017 426
- US-A1- 2008 055 637
- US-A1- 2009 041 482
- US-A1- 2013 334 771
- US-A1- 2015 098 101

## Description

### BACKGROUND OF THE INVENTION

### Field of the Invention

The present disclosure relates to a control apparatus, a control method for controlling an image forming system, and storage medium for controlling an image forming system including an image forming apparatus configured to form an image on a sheet and a plurality of sheet discharge apparatus configured to discharge the sheet having the image formed thereon.

### Description of the Related Art

In recent years, a service form called production printing has been widely spread. In production printing, small-lot and high-variety printing orders are received from customers, and the orders are printed by an image forming apparatus at high speed to be delivered. At this time, images are rapidly formed onto a large amount of sheets, and the sheets are discharged to a large-capacity stacker. The large-capacity stacker stacks several thousands of sheets at one time. A plurality of large-capacity stackers may be connected so that, even when one large-capacity stacker is full, image formation can be continued by automatically switching a sheet discharge destination to another large-capacity stacker. In this case, sheets having images formed thereon and corresponding to the same image forming job are discharged to a plurality of sheet discharge destinations in a divided manner.

Meanwhile, an operator collects the discharged sheets having images formed thereon to perform the next operation. However, it is not easy to identify a position of a sheet corresponding to a predetermined image forming job from a large amount of sheets discharged to a plurality of sheet discharge destinations.

In order to address this issue, in JP 2013 146898 A, in order to allow an operator to check the sheet discharge destination for each image forming job, information on the large-capacity stacker corresponding to the discharge destination is displayed on a display device. In this manner, the operator can check the sheet discharge destination corresponding to each image forming job, and reliably collect the sheets corresponding to a processed job.

In the technology disclosed in JP 2013 146898 A, what is displayed on the display device is a state of the sheet discharge apparatus at a time point at which the selected image forming job is ended. Therefore, a sheet discharge state of the sheets before collection cannot be recognized as appropriate.

Further, a discharge destination to which no sheets are actually discharged is not displayed. Therefore, in a case of the configuration in which a plurality of sheet discharge apparatus are connected, there remains an issue in that it is impossible to immediately recognize which sheet discharge apparatus the displayed sheet discharge destination corresponds to or what kind of state the stacked sheets are currently in. When the stacking states at the plurality of discharge destinations are recognizable, it becomes easy to determine which sheet discharge destination of the sheets is required to be selected in the subsequent image forming jobs to achieve efficiency, and the convenience is enhanced.

*Further prior art can be found in document* US 2005/017426 A1*, disclosing an image forming apparatus including an image forming member to form an image to an recording material, a plurality of sheet finisher units, each of which performs different sheet finishing to the recording material on which the image has formed, a plurality of indicating member provided respectively at least one to the each sheet finisher unit, an input member to accept an input of a sheet finishing mode corresponding to the sheet finishing performed by the sheet finisher unit, a sheet finishing judging member to judge the sheet finisher unit performing the sheet finishing corresponding to the input sheet finishing mode, and an indicating control member to light the indicating member provided to the judged sheet finisher unit in a first display mode.*

*Further prior art can be found in document* US 2015/098101 A1*, disclosing an image forming system and an image forming system control method. The image forming system includes an image forming section which forms images on sheets, a post-processing device which executes post-processing on the sheets on which the images are formed on the image forming section, and a controller which controls the image forming apparatus and the post-processing device, wherein the image forming section forms the images on the sheets in a state corresponding to the post-processing as a trial print with respect to a job for which the post-processing is designated, and the post-processing device ejects the sheets in a state that the post-processing is not completed on the sheets on which the images are formed.*

*Further prior art can be found in document* US 2008/055637 A1*, disclosing a printing system and a control method therefor. In the printing system, a display unit is caused to display a device configuration window that associates information representing a configuration of the printing system with information for indicating presence of a job processed by the printing system. An operator is prompted to select a job in execution by the printing system via the device configuration window in order to perform specific processing.*

*Further prior art can be found in document* US 2013/334771 A1*, disclosing a sheet processing apparatus, a method for controlling the sheet processing apparatus, and a storage medium. The method for controlling the sheet processing apparatus for performing control to discharge sheets onto a plurality of sheet discharge trays includes storing, in a storage unit, the discharge order in which sheets have been discharged onto equal two or more than two sheet discharge trays by executing a job, and performing, upon reception of a take-out instruction for taking out in the discharge order the sheets discharged by executing the job, processing for allowing a user to take out the sheets discharged onto the equal two or more than two sheet discharge trays, in the discharge order stored in the storage unit.*

### SUMMARY OF THE INVENTION

The present invention in its first aspect provides a control apparatus as specified in claims 1 *to* 9. The present invention in its second aspect provides a method as specified in *claim 10.* The present invention in its third aspect provides a storage medium as specified in *claim 11.*

Further features of the present disclosure will become apparent from the following description of embodiments (with reference to the attached drawings).

### BRIEF DESCRIPTION OF THE DRAWINGS

FIG. 1 is a configuration diagram of an image forming system.
FIG. 2 is a schematic diagram for illustrating a state in which sheet discharge apparatus are connected to an image forming apparatus.
FIG. 3 is a sectional view for illustrating conveyance mechanisms of the image forming system.
FIG. 4A, FIG. 4B, FIG. 4C, FIG. 4D, FIG. 4E, FIG. 4F, and FIG. 4G are schematic views for illustrating a process of an ejecting operation.
FIG. 5 is a diagram of apparatus display information.
FIG. 6 is a diagram of sheet discharge state information.
FIG. 7 is a flow chart for illustrating an operation procedure at the time when the image forming apparatus is activated.
FIG. 8 is a flow chart for illustrating an operation procedure at the time when an image forming job is processed.
FIG. 9 is a flow chart at the time when sheets are removed from a sheet discharge tray.
FIG. 10 is a control flow for illustrating an operation procedure of an information processing apparatus.
FIG. 11 is a display example of a monitor screen.
FIG. 12 is a flow chart for illustrating another operation procedure of the information processing apparatus.
FIG. 13A is an illustration of a sheet bundle image, FIG. 13B is an illustration of a list, and FIG. 13C is an illustration of a rendering command using scalable vector graphics (SVG).
FIG. 14A is an illustration of a sheet bundle image, FIG. 14B is an illustration of a list, and FIG. 14C is an illustration of a rendering command using SVG.
FIG. 15 is a display example of the monitor screen.

### DESCRIPTION OF THE EMBODIMENTS

### First Embodiment

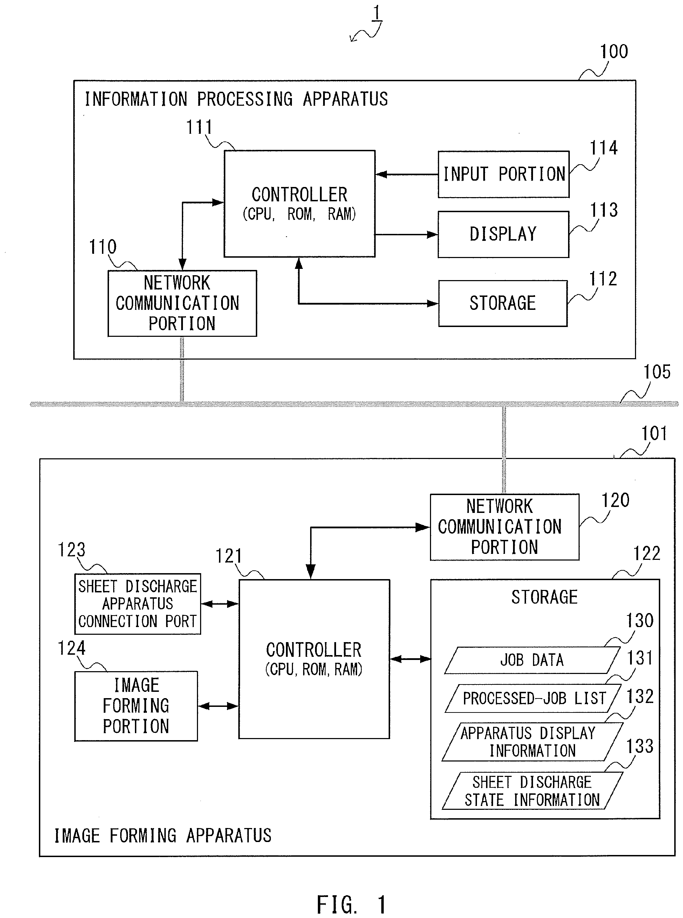

FIG. 1 is a diagram for illustrating a schematic configuration example of an image forming system to which the present disclosure is applied. An image forming system 1 includes an information processing apparatus 100 and an image forming apparatus 101, which are connected to a communication network 105. The first embodiment represents an example in which one information processing apparatus 100 and one image forming apparatus 101 are provided, but a plurality of image forming apparatus 101 may be connected. The communication network 105 is a local area network (LAN). As the communication network 105, a wide area network (WAN), a combination of the LAN and the WAN, or a wired network may be employed instead.

The information processing apparatus 100 includes a network communication portion 110, a controller 111, a storage 112, a display 113, and an input portion 114. The network communication portion 110 controls the communication performed with the communication network 105. The storage 112 stores data in a short or long term. The display 113 performs various types of display for an operator. In the first embodiment, the display 113 displays, for example, a sheet bundle image and a system configuration image to be described later. The input portion 114 receives various instructions from the operator, a range designation, input data, and designation of a processed job. The processed job refers to an image forming job for which image formation to the sheet has been finished as described later. When the display 113 is constructed of a touch panel, various instructions from the operator also can be input from the display 113.

The controller 111 is one type of computer including a central processing unit (CPU), a read only memory (ROM), and a random access memory (RAM). The CPU executes a computer program for terminal control to execute various functions for the information processing apparatus 100. This operation is described later. The ROM stores the above-mentioned computer program and the like. The RAM is a work memory for the CPU.

The image forming apparatus 101 includes a network communication portion 120, a controller 121, a storage 122, a sheet discharge apparatus connection port 123, and an image forming portion 124. The network communication portion 120 controls the communication performed with the communication network 105. The storage 122 stores data in a short or long term. The sheet discharge apparatus connection port 123 connects the sheet discharge apparatus. The image forming portion 124 forms an image onto a sheet for each input image forming job. The controller 121 is a computer including a CPU, a ROM, and a RAM, or may be an embedded computer. The CPU executes a computer program for image formation control to form various functions for the image forming apparatus 101 and operate as a control apparatus for controlling an operation of each of the functions. This operation is described later. The ROM stores the above-mentioned computer program for image formation control. The RAM is a work memory for the CPU.

The storage 122 of the image forming apparatus 101 stores job data 130, a processed-job list 131, apparatus display information 132, and sheet discharge state information 133. Examples of the job data 130 include image data and instruction data representing the details of the input image forming job, data obtained after execution of the image forming job, and data obtained during the process of execution of the image forming job. The processed-job list 131 is a list storing the image forming jobs executed by the image forming apparatus 101 as the processed jobs. The processed-job list 131 stores job attributes such as identification information (job ID) for identifying the image forming job, a job name, the number of pages, the number of bundles, and a sheet in association with one another.

The apparatus display information 132 is one type of information representing the entire arrangement mode (system configuration) of image forming device and a plurality of sheet stacking device, and is referred to when a system configuration image to be described later is generated. In this example, information representing the outer appearance, structure, and size of each of the image forming apparatus 101 and the sheet discharge apparatus, and the outer appearance, structure, and size as a whole during connection is referred to as the apparatus display information 132. For example, the apparatus display information 132 represents a mode in which, when three sheet discharge apparatus are connected to the image forming apparatus 101 in a daisy-chain configuration, the sheet discharge apparatus adjacent to the image forming apparatus 101 is arranged as the first sheet discharge apparatus, and then the second sheet discharge apparatus and the third sheet discharge apparatus are sequentially arranged. The apparatus display information 132 is determined based on the combination and the arrangement order of the connected sheet discharge apparatus. The sheet discharge apparatus is arranged to be replaceable with other sheet discharge apparatus. Therefore, the apparatus display information 132 is updated to new information as appropriate.

The sheet discharge state information 133 is one type of information representing a sheet discharge state of sheets having images formed thereon in each sheet stacking device, and is referred to when a sheet bundle image to be described later is generated. Details are described later, but the sheet discharge state information at least includes sheet discharge destination information (tray information) related to a sheet discharge destination of the sheets, job identification information (job ID) for identifying the image forming job, and stacking amount information (sheet number count) related to a stacking amount of the discharged sheets. The sheet having an image formed thereon is hereinafter referred to as "sheet". Further, a bundle of a plurality of sheets is hereinafter referred to as "sheet bundle". The sheet discharge state information 133 includes information representing the shape and the size of the sheet or the sheet bundle, which is required for generating the sheet bundle image to be described later. This information is updated in real time every time a detection result of a stacking state detected by a detection device to be described later is received. The "sheet discharge state" herein refers to presence or absence of a sheet at a sheet stacking portion (including the change in portion at which the sheets are stacked), and the transition of the outer shape and the size of the sheet and the sheet stacking height, that is, refers to all the changes in sheet state until the sheets are collected by an ejecting operation to be described later.

Next, the sheet discharge apparatus to be connected to the sheet discharge apparatus connection port 123 of the image forming apparatus 101 are described. The sheet discharge apparatus refers to a large-capacity stacker and a finisher, and are apparatus capable of being combined or replaced afterwards. Those sheet discharge apparatus operate as sheet stacking device capable of stacking and collecting the sheets for each image forming job. That is, each sheet discharge apparatus stacks sheets corresponding to a processed job onto the sheet stacking portion to achieve a sheet bundle of each image forming job.

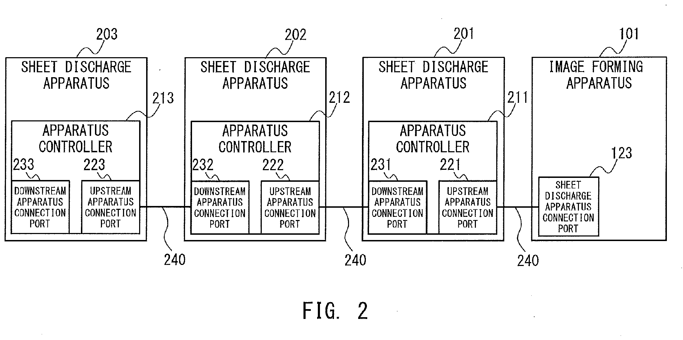

FIG. 2 is a schematic diagram for illustrating a connection example in a case in which three sheet discharge apparatus 201 to 203 are connected to the sheet discharge apparatus connection port 123 in a daisy-chain configuration. The sheet discharge apparatus 201 to 203 include apparatus controllers 211, 212, and 213, respectively, for controlling the operation of each own apparatus. The apparatus controllers 211, 212, and 213 include upstream apparatus connection ports 221, 222, and 223 and downstream apparatus connection ports 231, 232, and 233, respectively. Each of the upstream apparatus connection ports 221, 222, and 223 is a port for connecting to an apparatus on the upstream of the own apparatus via a communication cable 240. Each of the downstream apparatus connection ports 231, 232, and 233 is a port for connecting to an apparatus on the downstream of the own apparatus via the communication cable 240. In this manner, the image forming apparatus 101 and the three sheets discharge apparatus 201, 202, and 203 can communicate with each other. The third sheet discharge apparatus 203 may be omitted, or another apparatus that can communicate with the image forming apparatus 101 may be connected on the downstream of the third sheet discharge apparatus 203.

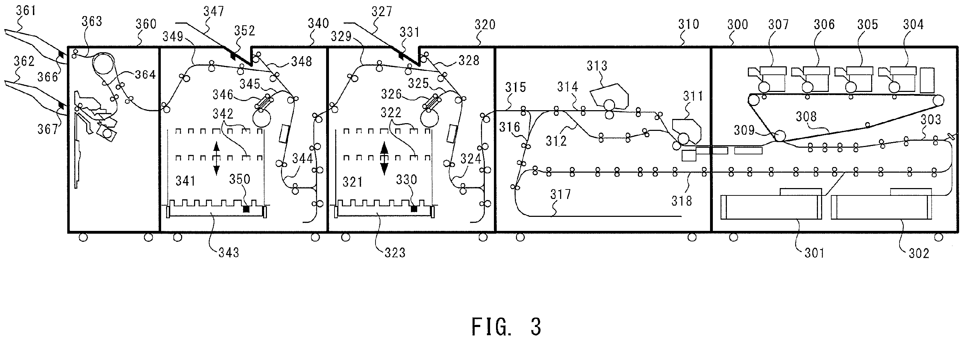

Each of the image forming apparatus 101 and the sheet discharge apparatus 201, 202, and 203 includes a sheet conveyance mechanism as a mechanical element. FIG. 3 is an explanatory view for illustrating those conveyance mechanisms. In FIG. 3, an image forming unit 300 is a unit configured to form an image to be transferred onto a sheet, and corresponds to the image forming portion 124 in FIG. 1. An image fixing unit 310 is a unit configured to fix the transferred image. Two large-capacity stackers 320 and 340 and one finisher 360 are connected to the image fixing unit 310 in a daisy-chain configuration.

In the image forming unit 300, each of sheet feeding decks 301 and 302 separates one uppermost sheet among the received sheets to convey the sheet to a sheet conveyance path 303. Development stations 304 to 307 use toner having colors of yellow (Y), magenta (M), cyan (C), and black (K) to cause adhesion of toner images. The adhering toner images are primarily transferred onto an intermediate transfer belt 308. The intermediate transfer belt 308 rotates, for example, clockwise to convey the sheet to a secondary transfer position 309. At this time, the toner images are transferred onto the sheet conveyed through the sheet conveyance path 303. The sheet having the toner images transferred thereon is conveyed to the image fixing unit 310.

In the image fixing unit 310, a fixing unit 311 melts and pressurizes the toner images to fix the toner images onto the sheet. The sheet that has passed through the fixing unit 311 is conveyed from a sheet conveyance path 312 to a sheet conveyance path 315. Additional heating and pressurization may be required depending on the sheet type. In this case, after the sheet passes through the fixing unit 311, the sheet is conveyed to a second fixing unit 313 using a sheet conveyance path in the stage subsequent to the fixing unit 311. The sheet subjected to additional heating and pressurization is conveyed to a sheet conveyance path 314. A reversing portion 316 reverses the conveyed sheet by a switch-back method. When an image is formed on one side of the sheet, the reversed sheet, that is, the sheet having an image formed thereon, is conveyed to the sheet conveyance path 315. When images are formed on both sides of the sheet, the sheet is conveyed to a duplex reverse path 317, and is reversed to be conveyed to a duplex conveyance path 318. In this manner, an image is formed on the second side at the secondary transfer position 309, and the sheet is conveyed to the sheet conveyance path 315. The sheet that has passed through the sheet conveyance path 315 passes through a sheet conveyance path 324 to be input to the large-capacity stacker 320.

The large-capacity stacker 320 includes a stacking portion 321 including a lift tray 322 and an ejection tray 323, which are each configured to stack sheets. Those trays are controlled by the apparatus controller 211 illustrated in FIG. 2. The lift tray 322 is positioned at a sheet stacking portion having a predetermined height under a state in which no sheets are stacked, and is lowered when the stacking proceeds. The ejection tray 323 is a tray for re-stacking the sheets at a time point at which the lift tray 322 is lowered to a re-stacking position, to thereby eject the sheets to the outside of the apparatus. The lift tray 322 and the ejection tray 323 are formed so that their bars for supporting the sheets are present at alternate positions. Therefore, the sheets on the lift tray 322 can be re-stacked onto the ejection tray 323 without issue. The sheet passes through the sheet conveyance path 324 and a sheet conveyance path 325 to be conveyed to a sheet discharge unit 326. The sheet discharge unit 326 includes a lower rotary member and an upper rotary member that are configured to nip the sheet, and to discharge the sheet in a flipped manner to the lift tray 322. The action of "discharging the sheet in a flipped manner" refers to an action of discharging the sheet with the front and back sides being reversed so that one of both surfaces of the sheet on a side in contact with the lower rotary member of the sheet discharge unit 326 is turned to become an upper surface on the lift tray 322.

The lift tray 322 is controlled to be lowered by an amount of a height of the stacked sheets as the stacking of the sheets proceeds so that an upper end of the stacked sheets is at a predetermined height. When the lift tray 322 is in a fully-stacked state, the lift tray 322 is lowered to the position of the ejection tray 323. The "fully-stacked state" refers to a state in which the sheets reach a maximum stackable amount of the lift tray 322 and no more sheets can be stacked on the lift tray 322. Then, at a time point at which the lift tray 322 reaches the re-stacking position that is lower than the ejection tray 323, the sheets are re-stacked onto the ejection tray 323. After that, the ejection tray 323 is carried to the outside of the apparatus. In this manner, the sheets are removable. This operation is called "ejecting operation".

The large-capacity stacker 320 further includes a top tray 327. The top tray 327 is one sheet stacking portion mainly used for outputting a sample of the sheets to be stacked on the stacking portion 321. During discharge to the stacking portion 321, one sheet (or one bundle) is output to the top tray 327 as a sample. In this manner, the quality of the image formation can be checked without taking out the sheets stacked in the stacking portion 321. When a sheet is output to the top tray 327, the sheet passes through the sheet conveyance path 324 and a sheet conveyance path 328 to be conveyed to the top tray 327. When a sheet is conveyed to an apparatus on the downstream of the large-capacity stacker 320, the sheet is conveyed through a sheet conveyance path 329.

The ejection tray 323 and the top tray 327 include sheet presence/absence detection sensors 330 and 331, respectively. The sheet presence/absence detection sensors 330 and 331 operate as one type of detection device for detecting the change in stacking state of the sheets on the tray at every predetermined timing. The controller 121 receives the detection results of the sheet presence/absence detection sensors 330 and 331 in time series, and updates the sheet discharge state information 133 in the storage 122 based on the received detection results. In the first embodiment, description is given of an example in which the sheet presence/absence detection sensor detects the change in sheet stacking state, but the present disclosure is not limited thereto. For example, another sensor configured to detect the sheet stacking height may be provided, and the sensor may detect the change in sheet stacking state. Further, the CPU of the controller 121 may detect the change in sheet stacking state. The large-capacity stacker 340 has the same configuration as that of the large-capacity stacker 320. That is, the stacking portion 321 (lift tray 322 and ejection tray 323) of the large-capacity stacker 320 corresponds to a stacking portion 341 (lift tray 342 and ejection tray 343) of the large-capacity stacker 340. Similarly, the sheet conveyance paths 324, 325, 328, and 329 and the sheet discharge unit 326 of the large-capacity stacker 320 correspond to sheet conveyance paths 344, 345, 348, and 349 and a sheet discharge unit 346 of the large-capacity stacker 340, respectively. Further, the top tray 327 and the sheet presence/absence detection sensors 330 and 331 of the large-capacity stacker 320 correspond to a top tray 347 and sheet presence/absence detection sensors 350 and 352 of the large-capacity stacker 340, respectively. Those components are controlled by the apparatus controller 212.

The finisher 360 subjects the conveyed sheet to predetermined post-processing under the control of the apparatus controller 213 illustrated in FIG. 2 based on the function designated by the operator. As an example of the post-processing, in this example, the sheet is subjected to stapling (one-portion or two-portion binding) and punching (two or three holes). The finisher 360 includes two sheet discharge trays 361 and 362 each serving as a sheet stacking portion. To the sheet discharge tray 361, a sheet not to be subjected to post-processing, for example, stapling, is discharged through a sheet conveyance path 363. To the sheet discharge tray 362, a sheet subjected to a finishing function designated by the operator is discharged through a sheet conveyance path 364.

Each of the sheet discharge trays 361 and 362 is configured to be raised or lowered. It is also possible to perform such an operation that the sheet discharge tray 361 is lowered so that a plurality of sheets subjected to post-processing are stacked onto the sheet discharge tray 361. The sheet discharge trays 361 and 362 include sheet presence/absence detection sensors 366 and 367, respectively, which are each configured to detect the stacking state of the sheets on the tray. The sheet presence/absence detection sensors 366 and 367 also operate as one type of detection device for detecting the change in stacking state of sheets on the tray at every predetermined timing. The detection results are transmitted to the image forming apparatus 101 in time series by the apparatus controllers (see FIG. 2) included in the large-capacity stackers 320 and 340.

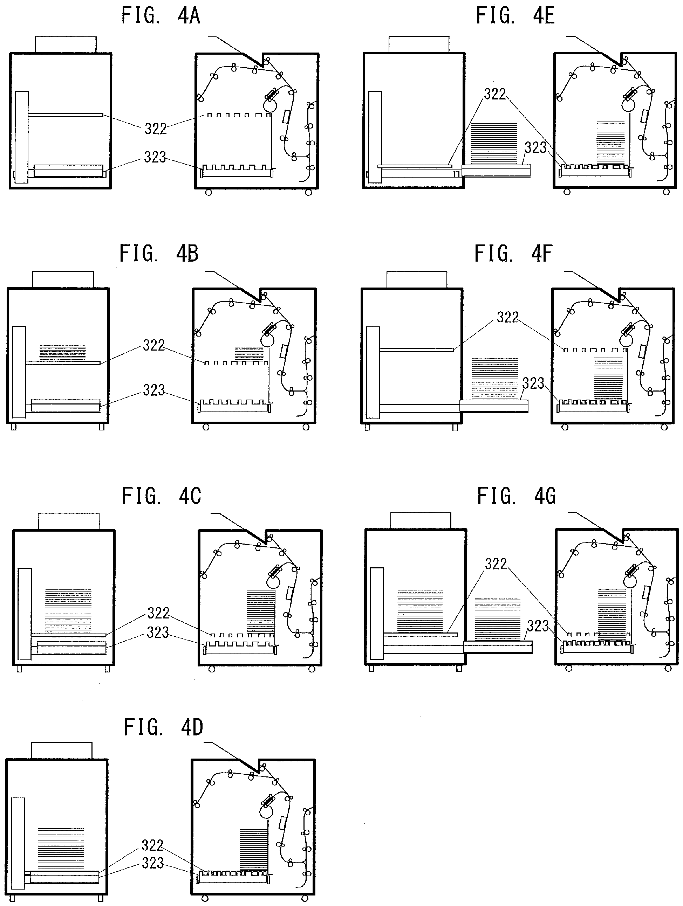

Next, description is given of the sheet stacking state in the large-capacity stacker 320 with reference to FIG. 4A to FIG. 4G. In each drawing, a right side as viewed from an observer corresponds to a sectional view in which the mechanical elements of the large-capacity stacker 320 are viewed from the front side, and a left side as viewed from the observer corresponds to a sectional view in which the mechanical elements of the large-capacity stacker 320 are viewed from the left lateral side. The large-capacity stacker 340 has a similar configuration, and hence the large-capacity stacker 320 is described as a representative stacker.

FIG. 4A is an illustration of a state in which no sheets are stacked on the large-capacity stacker 320. The lift tray 322 is raised and stopped at a predetermined height, that is, at a position of a sheet discharge port for discharging the sheets to the stacking portion 321. The ejection tray 323 is accommodated in the apparatus. FIG. 4B is an illustration of a state during an image forming operation. As the stacking of the sheet proceeds, the apparatus controller gradually lowers the lift tray 322 so that the height of the uppermost surface of the stacked sheets matches the position of the sheet discharge port of the stacking portion 321. FIG. 4C is an illustration of a state in which a fully-stacked state of the lift tray 322 is detected. When the lift tray 322 is in the fully-stacked state, stacking onto the lift tray 322 cannot be continued any more. Therefore, the apparatus controller starts control of re-stacking the stacked sheets onto the ejection tray 323. FIG. 4D is an illustration of a state in which the lift tray 322 is lowered to the re-stacking position of the ejection tray 323 and the sheets are re-stacked onto the ejection tray 323. Even when the lift tray 322 is lowered to the same height as that of the ejection tray 323, the bars for supporting the sheets are located at alternate positions, and hence the bars do not interfere with each other. At a time point at which the lift tray 322 reaches the re-stacking position that is lower than the ejection tray 323, there is obtained a state in which the sheets stacked on the lift tray 322 are re-stacked onto the ejection tray 323.

FIG. 4E is an illustration of a state in which the ejection tray 323 having the sheets stacked thereon is ejected to the outside of the apparatus. When the ejection tray 323 is ejected as described above, the stacked sheets become collectable. FIG. 4F is an illustration of a state in which, under a state in which the ejection tray 323 is ejected, the lift tray 322 is raised again to the position at which the subsequent sheets are stacked thereon. In this manner, sheets can be stacked on the lift tray 322. FIG. 4G is an illustration of a state in which, after the image formation is continued under a state in which the ejection tray 323 is ejected, the fully-stacked state of the lift tray 322 is detected. In this state, the ejection tray 323 is ejected, and hence the sheets stacked on the lift tray 322 cannot be re-stacked onto the ejection tray 323. The sheets stacked on the ejection tray 323 are required to be collected to continue the stacking in the large-capacity stacker 320.

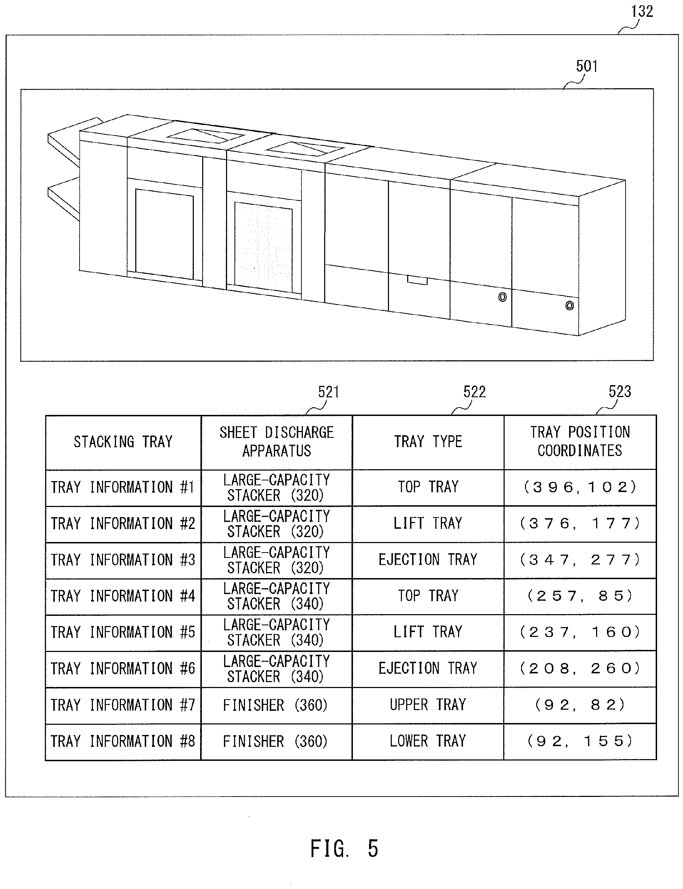

FIG. 5 is a schematic diagram of the apparatus display information. Based on the apparatus display information 132 of FIG. 5 received from the image forming apparatus 101, display content to be described later is displayed on the display 113 of the information processing apparatus 100. The display content of a screen to be displayed on the display 113 is generated by the controller 111. Alternatively, the controller 121 of the image forming apparatus 101 may generate the display content and the information processing apparatus 100 may receive the display content. The content of the apparatus display information 132 differs depending on the combination of the sheet discharge apparatus. In the first embodiment, for the sake of convenience of description, it is assumed that the apparatus display information 132 corresponding to all combinations of mountable sheet discharge apparatus is stored in advance. As an example, description is given of an example of the apparatus display information 132 corresponding to the arrangement mode exemplified in FIG. 3. A schematic diagram is used in FIG. 5, but the actual apparatus display information 132 is stored in a form of an extensible markup language (XML) or comma-separated values (CSV), for example.

The upper stage of FIG. 5 represents a system configuration image 501 that visualizes the entire arrangement mode by expressing the entire arrangement mode in, for example, a bitmap format, and the lower stage of FIG. 5 represents a table in which information on position of the sheet discharge tray included in each sheet discharge apparatus is stored. The system configuration image 501 can be displayed as a two-dimensional image or a three-dimensional image, but is displayed as a three-dimensional image in this case. A sheet or a sheet bundle is not drawn in the system configuration image 501 illustrated at the upper stage of FIG. 5, but when a sheet is conveyed, a structure image of the sheet discharge tray at the stacking portion for the sheet is also displayed. For example, there is displayed a system configuration image including a structure image representing a lift tray and an ejection tray that are displaced in the above-mentioned large-capacity stackers 320 and 340. In the example illustrated in FIG. 3, each of the large-capacity stackers 320 and 340 includes three sheet discharge trays (top tray, lift tray, and ejection tray), and the finisher 360 includes two sheet discharge trays (upper tray and lower tray). Therefore, in such an arrangement mode, a total of eight sheet discharge trays are usable. In the system configuration image 501 at the upper stage of FIG. 5, an actual arrangement mode and structure images of those sheet discharge apparatus and sheet discharge trays are displayed. Therefore, the operator can intuitively recognize which sheet discharge tray the sheets are stacked on and whether the sheets are collectable.

In the table shown at the lower stage of FIG. 5, each of records of trays #1 to #8 corresponds to a sheet discharge apparatus 521 to which each tray is installed, a tray type 522, and tray position coordinates 523. That is, "tray #1" is the top tray of the large-capacity stacker 320, and is provided at tray position coordinates (396, 102) with reference to the system configuration image 501. The tray position coordinates are offset values (pixel numbers) in a right direction and a lower direction with the upper left of the system configuration image 501 serving as an origin. Other trays #2 to #8 have similar content.

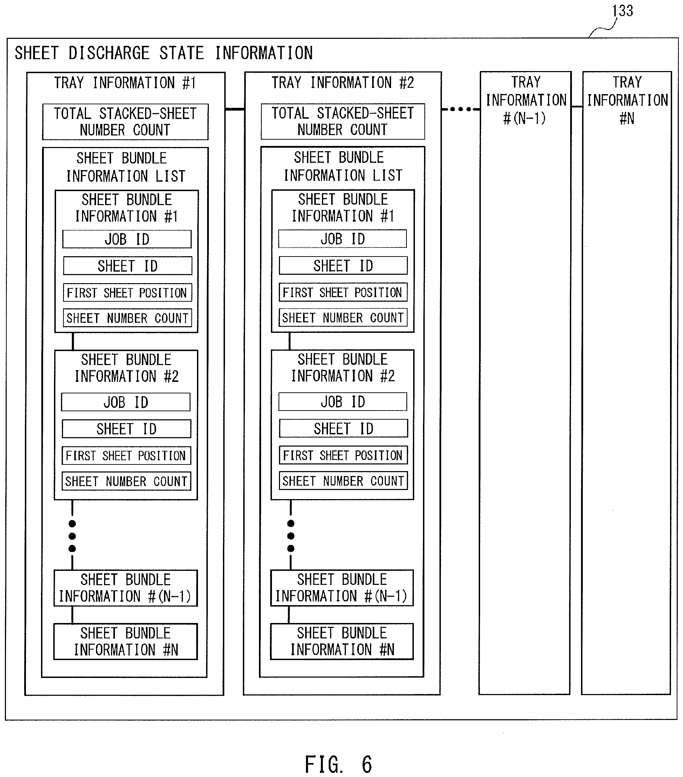

FIG. 6 is a diagram of the sheet discharge state information 133. The sheet discharge state information 133 is stored in the storage 122 by the controller 121, and is updated at a timing at which the detection result of the stacking state in each sheet discharge tray is received, for example. Further, the sheet discharge state information 133 can be referred to by the controller 121 as appropriate. The sheet discharge state information 133 has a list-type data structure. That is, tray information (sheet discharge destination information) representing the stacking state of the usable sheet discharge tray for each tray is represented as tray information #1 to tray information #N. In the relationship with the table shown at the lower stage of FIG. 5, the detection result of the stacking state in the tray #1 corresponds to the tray information #1. The same applies to the tray information #2, the tray information #(N-1), and the tray information #N. N is a natural number, and N is 8 in the case of the arrangement mode illustrated in FIG. 3.

In FIG. 6, the tray information #1 to the tray information #8 are in a data format having a total stacked-sheet number count (stacking amount information) and a sheet bundle information list as member variables. The total stacked-sheet number count is a variable for counting a total number of sheets stacked on the sheet discharge tray. In the sheet bundle information list, pieces of sheet bundle information for managing the information on each sheet bundle are arranged in a list in the stacking order of the sheets. When no sheets are stacked on any sheet discharge tray, the sheet bundle information list is an empty list. Each piece of sheet bundle information has, as member variables, a job ID (job identification information), a sheet ID, a first sheet position, and a sheet number count. The job ID is a variable representing an ID of an image forming job corresponding to the sheet bundle. Each image forming job is allocated with a unique ID by the image forming apparatus 101, and the ID is stored in the member variable. The sheet ID is a variable representing an ID of the sheet corresponding to the sheet bundle. The sheet is defined based on characteristics such as a size, a basis weight, and states of the front and back surfaces, and a sheet ID allocated for identifying the sheet is recorded in the member variable. The first sheet position is a variable representing what number the first sheet of the sheet bundle corresponds to when counted from the first sheet stacked on the sheet discharge tray. The sheet number count is a variable for counting the total number of sheets of the sheet bundle.

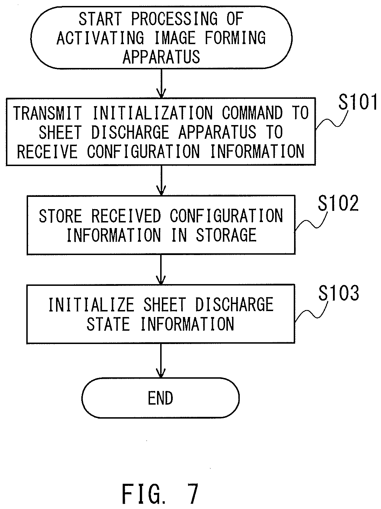

Next, an operation of the image forming system 1 in the first embodiment is described. First, the operation of the image forming apparatus 101 at the time of activation thereof is described with reference to FIG. 7. FIG. 7 is a flow chart for illustrating the operation to be executed when the image forming apparatus 101 is activated. This flow chart is executed by the controller 121 controlling each portion in the image forming apparatus 101. When the image forming apparatus 101 is activated, the controller 121 transmits an initialization command to all of the connected sheet discharge apparatus via the communication cable, to thereby receive configuration information on each sheet discharge apparatus (Step S101). Each sheet discharge apparatus that has received the initialization command transmits back to the image forming apparatus 101 information including the sheet discharge apparatus ID for identifying the type of the own apparatus, the state information, and the apparatus configuration information (number of sheet discharge trays and positions of sheet discharge trays). The controller 121 can recognize the system configuration of the entire image forming system based on the information received in Step S101. In the example of the image forming system of FIG. 3, the controller 121 recognizes that two large-capacity stackers 320 and 340 are connected on the downstream of the image forming apparatus in the conveyance direction and the finisher 360 is connected on the further downstream. Then, the controller 121 recognizes that each of the large-capacity stackers 320 and 340 includes the top tray, the lift tray, and the ejection tray, and the finisher 360 includes two sheet discharge trays 361 and 362.

The controller 121 stores the system configuration information received from each sheet discharge apparatus in the storage 122 (Step S102). The system configuration information should include the sheet discharge apparatus ID. With the received configuration information, it can be recognized how the sheet discharge apparatus connected to the image forming apparatus 101 are currently arranged (order of the sheet discharge apparatus and the like), and as a result, where the sheet stacking portion is positioned. The controller 121 should identify the apparatus display information 132 corresponding to the arrangement mode of the currently-connected sheet discharge apparatus based on the stored sheet discharge apparatus ID from the apparatus display information 132 stored in advance in accordance with the combination of the sheet discharge apparatus. For example, in the arrangement mode illustrated in FIG. 3, the apparatus display information 132 corresponding to the configuration in which two large-capacity stackers and one finisher are connected is identified.

After the apparatus display information 132 is identified, the controller 121 initializes the sheet discharge state information 133 (Step S103). That is, the sheet discharge state information 133 is newly generated based on the system configuration information stored in Step S102. Sheets are not stacked yet on any sheet discharge tray immediately after the image forming apparatus 101 is activated. Therefore, in each piece of tray information of the sheet discharge state information 133, the total stacked-sheet number count is 0, and the sheet bundle information list is an empty list.

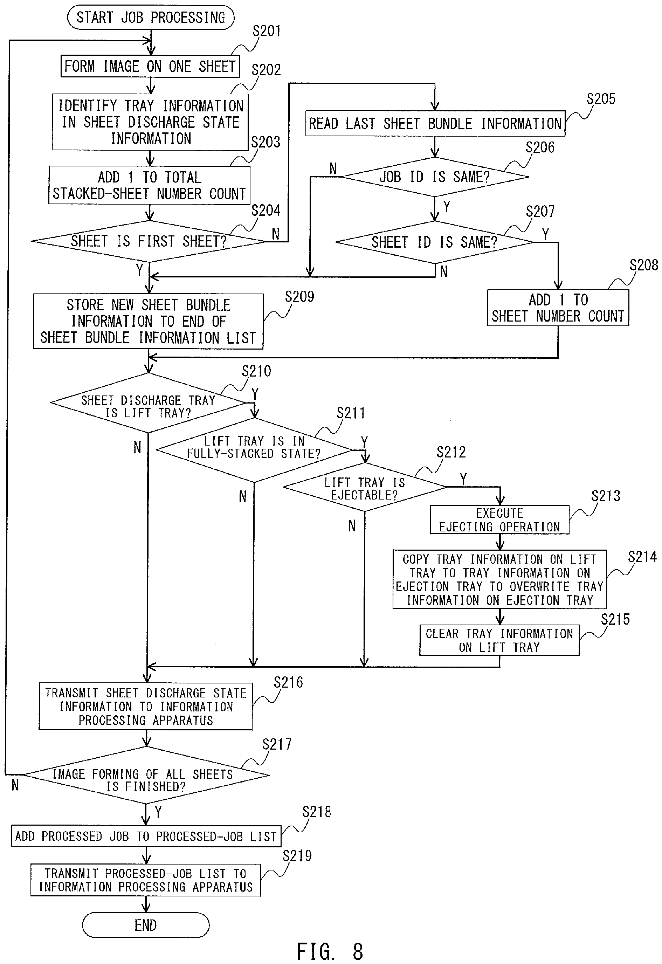

Next, with reference to FIG. 8, description is given of an operation example at the time when the image forming job is executed in the image forming apparatus 101. It is assumed that the image forming job is received from, for example, the information processing apparatus 100. The image forming job includes designation of tray information on the sheet stacking portion, that is, the sheet discharge apparatus to be used. In the following description, for the sake of convenience, it is assumed that the tray information on the large-capacity stacker 320 is designated. FIG. 8 is a control flow of the image forming apparatus 101 at this time. This control flow is also executed by the controller 121 integrally controlling the respective portions of the apparatus.

In the image forming apparatus 101, image formation of one sheet is performed in the order of pages in accordance with the image forming job. After the image formation, the conveyance of the sheet toward the large-capacity stacker 320 designated by the image forming job is started (Step S201). At this time, the controller 121 identifies the tray information on the designated large-capacity stacker 320 (Step S202). The tray information can be identified by referring to the apparatus display information 132 determined based on the arrangement mode of the sheet discharge apparatus. For example, tray #1 of the tray information of the table at the lower stage of FIG. 5 is referred to. Tray #1 corresponds to the top tray of the large-capacity stacker 320. Similarly, tray #2 corresponds to the lift tray of the large-capacity stacker 320. When tray #2 is identified here, the controller 121 refers to the record of tray #2 as the tray information.

The controller 121 adds 1 to the total stacked-sheet number count of the identified tray information (Step S203). The controller 121 further determines whether or not the discharged sheet is the first sheet in the sheet discharge tray based on the value of the total stacked-sheet number count (Step S204). When the sheet is not the first sheet (Step S204: N), the controller 121 refers to the tray information to read last sheet bundle information in the sheet bundle information list (Step S205). Then, the controller 121 determines whether or not the job ID of the job for which the image formation is performed is the same as the job ID in the sheet bundle information read in Step S205 (Step S206). When the job ID is the same (Step S206: Y), the controller 121 determines whether or not the sheet ID of the sheet subjected to image formation in Step S201 is the same as the sheet ID in the sheet bundle information read in Step S205 (Step S207). When the sheet ID is the same (Step S207: Y), the controller 121 adds 1 to the sheet number count of the last sheet bundle information in the tray information (Step S208), and the processing proceeds to Step S210.

When the sheet is the first sheet in Step S204 (Step S204: Y), when the job ID differs in Step S206 (Step S206: N), and when the sheet ID differs in Step S207 (Step S207: N), the controller 121 executes the processing of Step S209. That is, new sheet bundle information is generated at the end of the sheet bundle information list in the tray information. The member variables of the generated new sheet bundle information are as follows. First, the job ID is the job ID of the job for which the image formation is performed. The sheet ID is a sheet ID corresponding to the sheet subjected to image formation in Step S201. The total stacked-sheet number count is input as the first sheet position. Finally, the sheet number count is 1.

Next, the controller 121 determines whether or not the sheet discharge tray designated in Step S201 is the lift tray of the large-capacity stacker 320 (Step S210). When the sheet discharge tray is the lift tray (Step S210: Y), the controller 121 determines whether or not the lift tray is in the fully-stacked state after sheets are discharged in Step S201 (Step S211). When the lift tray is in the fully-stacked state (Step S211: Y), the controller 121 determines whether or not the lift tray in the fully-stacked state in Step S211 is ejectable (Step S212). Whether the lift tray is ejectable is determined based on whether or not the sheet bundles are stacked on the ejection tray of the same large-capacity stacker. When the sheet bundles are stacked on the ejection tray, that is, when the sheet presence/absence detection sensor 330 or the like detects that the sheet bundles are stacked, the controller 121 determines that the lift tray is not ejectable. Otherwise, the controller 121 determines that the lift tray is ejectable. When the lift tray is ejectable (Step S212: Y), the controller 121 re-stacks the sheet bundles stacked on the lift tray detected to be in the fully-stacked state in Step S211 onto the ejection tray, and executes the ejecting operation (Step S213). After that, the controller 121 copies, in the sheet discharge state information 133, the tray information on the lift tray for which the ejecting operation of the large-capacity stacker 320 is executed in Step S213, to the tray information on the same large-capacity stacker to overwrite the tray information on the same large-capacity stacker (Step S214). Further, the controller 121 clears, in the sheet discharge state information 133, the tray information on the lift tray for which the ejecting operation is executed in Step S213 (Step S215). In this case, clearing the tray information refers to obtaining an empty sheet bundle information list by setting the total stacked-sheet number count in the tray information to 0.

When the sheet discharge tray is not the lift tray (Step S210: N), when the lift tray is not in the fully-stacked state (Step S211: N), and when the lift tray is not ejectable (Step S212: N), the controller 121 transmits the sheet discharge state information 133 to the information processing apparatus 100 (Step S216). The same is applied after the tray information on the lift tray is cleared (Step S215). After that, the controller 121 determines whether or not the image formation of all of the sheets by the image forming job is finished (Step S217). When the image formation is not finished yet (Step S217: N), the processing returns to Step S201. When image formation of all of the sheets is finished (Step S217: Y), the controller 121 adds the processed job to the processed-job list 131 (Step S218). Then, the controller 121 transmits the processed-job list 131 that has been updated based on the addition to the information processing apparatus 100 (Step S219), and the series of processing is ended.

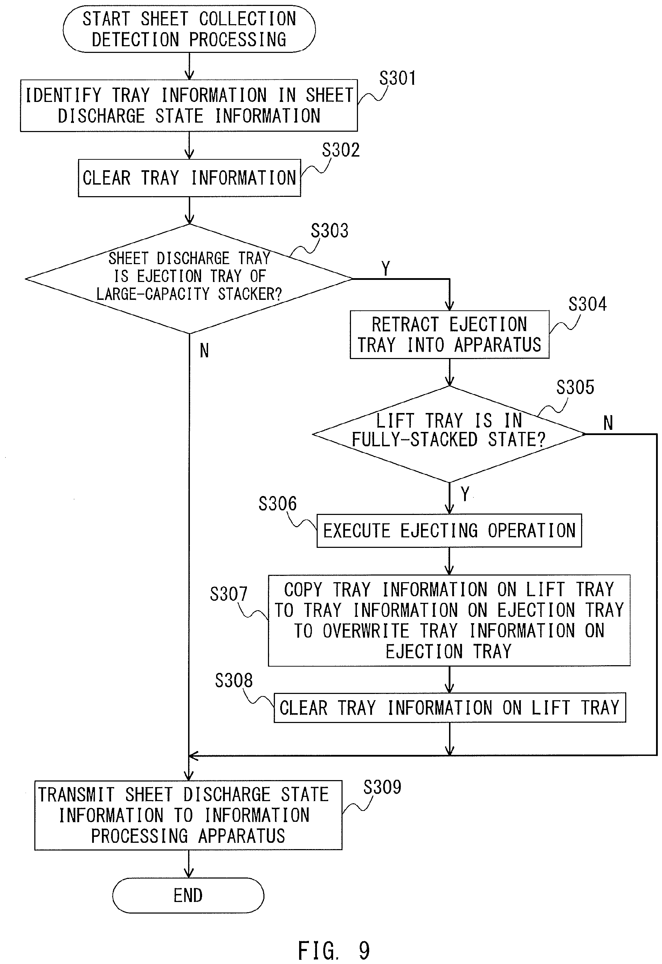

Next, with reference to FIG. 9, description is given of an operation when the collection of sheets from the sheet discharge tray is detected in the image forming apparatus 101. FIG. 9 is a control flow of sheet collection detection processing. This control flow is also executed by the controller 121 integrally controlling the respective portions of the apparatus. The sheet collection is detected when a state in which the sheet presence/absence detection sensors 330 and 331 detect the stacking state of the sheet bundles is changed to a state in which the stacking state is not detected any more.

The controller 121 refers to the sheet discharge state information 133 to identify the tray information corresponding to the sheet discharge tray at which the sheet collection is detected (Step S301). Then, the controller 121 clears the tray information (Step S302). The controller 121 further determines whether or not the sheet discharge tray is the ejection tray 323 of the large-capacity stacker 320 (Step S303). When the sheet discharge tray is the ejection tray 323 (Step S303: Y), the controller 121 retracts the ejection tray 323 into the apparatus (large-capacity stacker 320) (Step S304). Further, the controller 121 determines whether or not the lift tray 322 of the large-capacity stacker 320 at which the sheet collection is detected is in the fully-stacked state (Step S305). When the lift tray 322 is in the fully-stacked state (Step S305: Y), the controller 121 re-stacks the sheets stacked on the lift tray 322 in the fully-stacked state onto the ejection tray 323 to execute the ejecting operation (Step S306). Then, the controller 121 copies, in the sheet discharge state information 133, the tray information on the lift tray 322 for which the ejecting operation is executed, to the tray information on the ejection tray 323 of the large-capacity stacker 320 to overwrite the tray information on the ejection tray 323 (Step S307). After that, the controller 121 clears, in the sheet discharge state information 133, the tray information on the lift tray 322 for which the ejecting operation is executed (Step S308).

When the sheet discharge tray corresponding to the empty tray information is not the ejection tray 323 (Step S303: N), the controller 121 transmits the sheet discharge state information 133 to the information processing apparatus 100 (Step S309), and ends the series of processing. The same processing is performed when the lift tray 322 is not in the fully-stacked state (Step S305: N) and after the tray information on the lift tray 322 is cleared in Step S308.

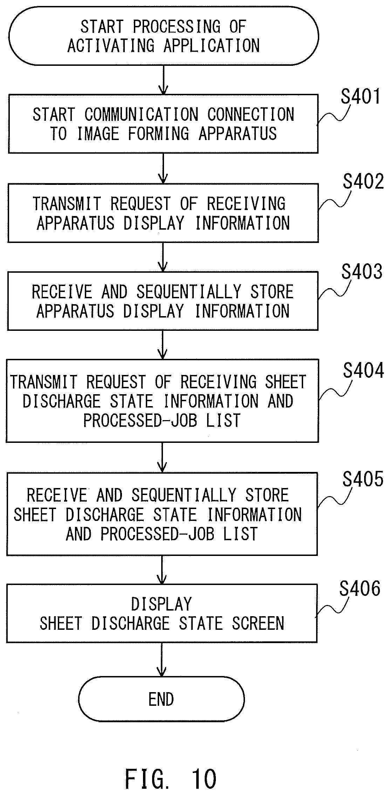

The operator can recognize the stacking state of each sheet discharge apparatus connected to the image forming apparatus 101 as required by an application executed by the computer program for terminal control in the information processing apparatus 100. The operation of the information processing apparatus 100 at this time is described with reference to FIG. 10. FIG. 10 is a control flow at the time when the application is activated. This control flow is executed by the controller 111 integrally controlling the respective portions of the terminal.

When an application is activated in the information processing apparatus 100, the controller 111 starts communication connection to the image forming apparatus 101 (Step S401). The communication connection refers to continuous establishment of a communication path until the operator inputs a clear cancel instruction. When the communication path is established, a request of receiving the apparatus display information 132 is transmitted to the image forming apparatus 101 (Step S402). When the image forming apparatus 101 receives this acquisition request, the image forming apparatus 101 transmits the apparatus display information 132 corresponding to the current apparatus configuration. When the apparatus display information 132 is updated while the communication connection is established, the image forming apparatus 101 transmits the updated apparatus display information 132 to the information processing apparatus 100. When the information processing apparatus 100 receives the updated apparatus display information 132 from the image forming apparatus 101, the information processing apparatus 100 sequentially stores the apparatus display information 132 to the storage 112 (Step S403).

The controller 111 further transmits a request of receiving the sheet discharge state information and the processed-job list to the image forming apparatus 101 (Step S404). When the image forming apparatus 101 (controller 121) receives this acquisition request, the image forming apparatus 101 (controller 121) transmits the sheet discharge state information 133 and the processed-job list 131 that are currently stored to the information processing apparatus 100. The controller 111 stores the sheet discharge state information 133 and the processed-job list 131 received from the image forming apparatus 101 to the storage 112 (Step S405). Further, the controller 111 generates a sheet discharge state screen based on the stored apparatus display information 132, sheet discharge state information 133, and processed-job list 131 to display the sheet discharge state screen on the display 113 (Step S406).

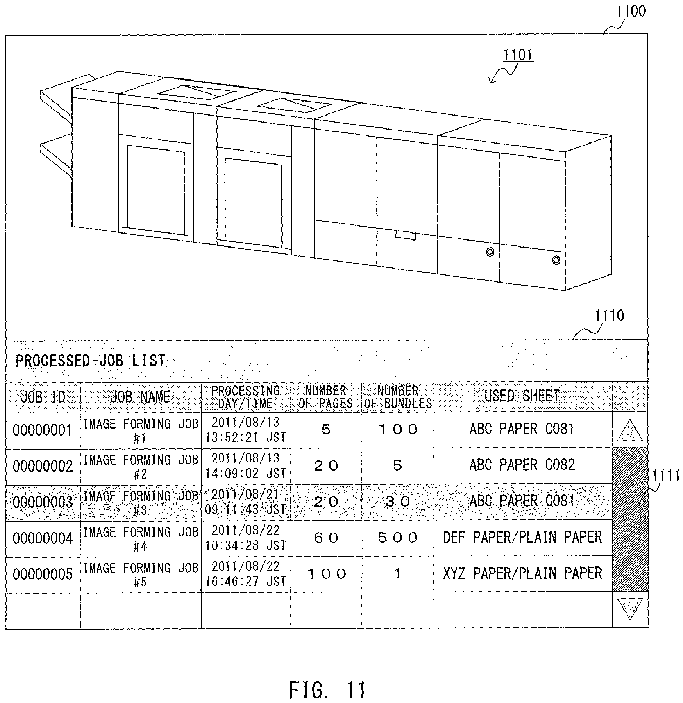

An example of a monitor screen is illustrated in FIG. 11. In a monitor screen 1100 exemplified in FIG. 11, an image region 1101 and a list region 1110 are formed. The image region 1101 is a region for visually displaying the system configuration image and the sheet stacking state of each image forming job, and has a two-display-layer structure. That is, the image region 1101 includes a first display layer for displaying the system configuration image, and a second display layer for displaying in combination a sheet bundle image at the sheet stacking portion of the system configuration image on the first display layer. In the first display layer, the system configuration image (system configuration image 501 illustrated in FIG. 5) generated based on the apparatus display information 132 stored in Step S403 is displayed. In the second display layer, based on the sheet discharge state information 133 received by the information processing apparatus 100, the sheet bundle image that visualizes the sheet or sheet-bundle stacking state in each sheet discharge tray is displayed in combination. The display of the sheet bundle image is updated in real time at a timing at which the change in sheet stacking state is detected. That is, the controller 111 is configured so that the mode of displaying the sheet bundle image on the display 113 can be changed in real time for each image forming job.

In FIG. 11, the system configuration image 1101 in a state in which no sheets are stacked on the sheet discharge tray is displayed. In the list region 1110, the processed-job list received by the information processing apparatus 100 from the image forming apparatus 101 is displayed. In the processed-job list, job attributes (job ID, job name, number of pages, number of bundles, and used sheet) of each processed job are displayed. The controller 111 allows the sheet bundle image to be displayed in the order in the processed-job list. Further, the controller 111 allows the sheet bundle image corresponding to the designated processed job and the sheet bundle image corresponding to other processed jobs to be displayed in a distinguished manner.

The operator can operate the input portion 114 to designate any processed job on the processed-job list. In the example of FIG. 11, there is illustrated a state in which a processed job (job name: image forming job #3) having a job ID of "00000003" is designated. When the number of processed jobs listed in the processed-job list is larger than the number of jobs that can be displayed at one time in the list region 1110, a scroll bar 1111 is used. The operator can operate the scroll bar 1111 to designate any processed job. The designated processed job is displayed in a highlighted (inverted) manner to be distinguished from other processed jobs.

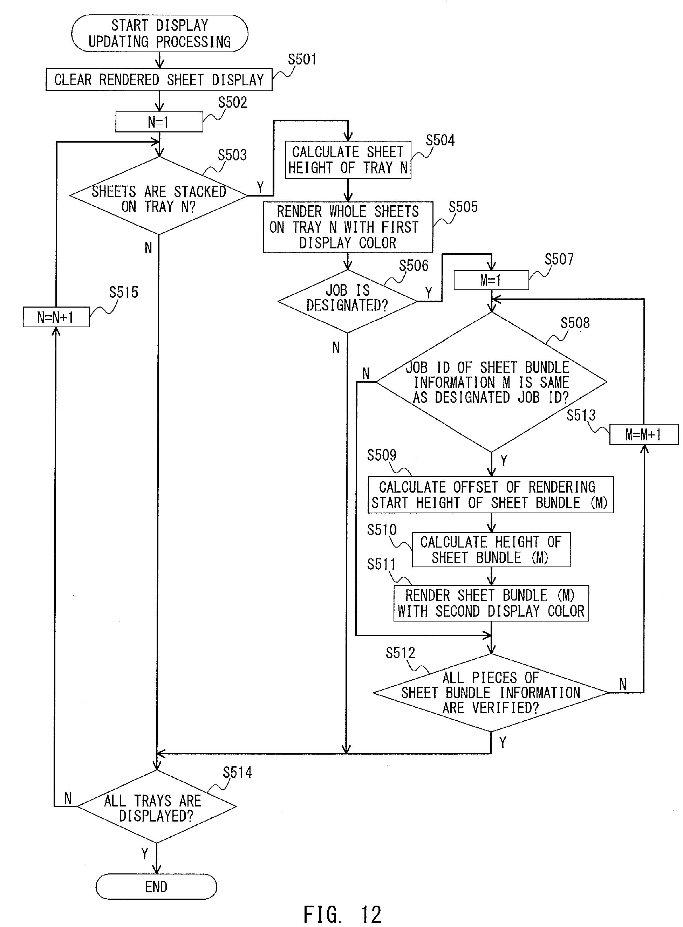

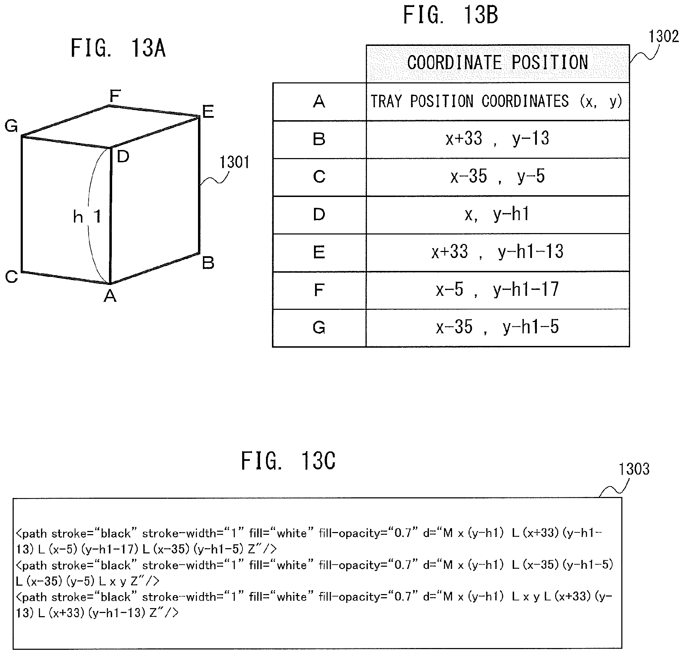

Next, description is given of an operation example of a case in which the sheet discharge state information is received in the image forming apparatus 101, or a case in which the designated processed job is changed. FIG. 12 is a control flow to be executed by the controller 111 of the information processing apparatus 100 at this time. In FIG. 12, the controller 111 clears (deletes) the display of the sheet bundle image displayed in the second display layer of the image region 1101 (Step S501). The controller 111 substitutes 1 for a variable N representing the stacking order of the sheet discharge tray (Step S502), and then determines whether or not the sheets are stacked on the tray N in the sheet discharge state information (Step S503). When the total stacked-sheet number count in the tray information N is 0, it is determined that no sheets are stacked. When the sheets are stacked (Step S503: Y), the controller 111 calculates a height (h1 in FIG. 13) of the sheet bundle stacked on the tray N (Step S504). In this case, when the entire sheet bundle stacked on the tray N is displayed, the pixel of the height of the sheet bundle is calculated. The height of the sheet bundle is calculated by multiplying the total stacked-sheet number count of the tray information N by a predetermined coefficient P. The coefficient P is a coefficient representing the pixel corresponding to the height of one sheet. When the height of the sheet bundle includes a decimal value as a result of calculation, the value is rounded up to an integer value.

After the height of the sheet bundle is calculated, the controller 111 renders and displays the sheet bundle image representing the sheet bundle stacked on the tray N with a first display color (Step S505). As a result, a sheet discharge state screen in which the system configuration image and the sheet bundle image are combined is displayed on the display 113. After that, the controller 111 determines whether or not the image forming job is designated in the list region 1110 (Step S506). When no image forming job is designated (Step S506: N), the processing proceeds to Step S514. When the image forming job is designated (Step S506: Y), the controller 111 substitutes 1 for a variable M representing the order of the sheet bundle information (Step S507). The sheet bundle information M thereafter represents the M-th sheet bundle information in the sheet bundle information list of the tray information N of the received sheet discharge state information.

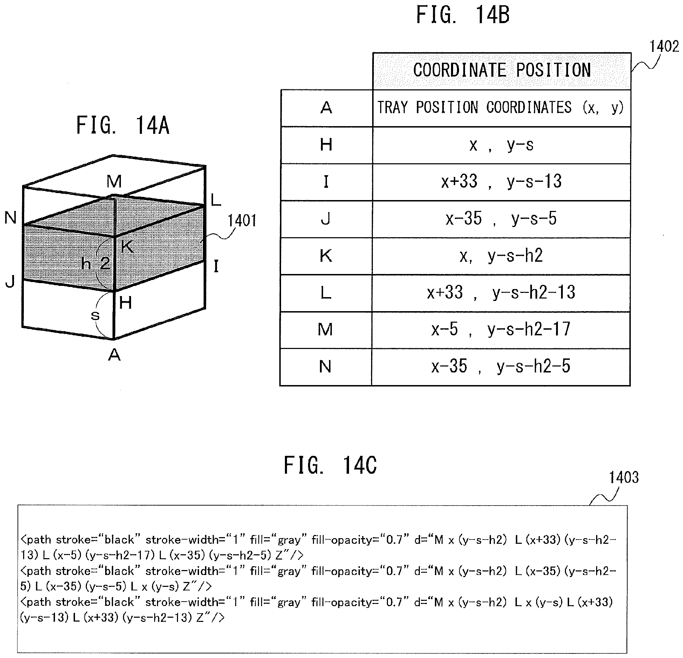

The controller 111 then determines whether or not the job ID of the sheet bundle information M is the same as the job ID of the image forming job designated in the list region 1110 (Step S508). When the job ID is not the same (Step S508: N), the processing proceeds to Step S512. When the job ID is the same (Step S508: Y), the controller 111 calculates a rendering start height offset (s in FIG. 14) of the sheet bundle (M) corresponding to the sheet bundle information M (that is, sheet bundle of designated image forming job) (Step S509). The rendering start position height of the sheet bundle (M) is calculated by multiplying the rendering start position of the sheet bundle (M) corresponding to the sheet bundle information M by the above-mentioned coefficient P. When the rendering start position height includes a decimal value as a result of the calculation, the value is rounded down to an integer value.

After that, the controller 111 calculates the height of the sheet bundle (M) corresponding to the sheet bundle information M (Step S510). That is, the controller 111 calculates the pixel corresponding to the height of the sheet bundle (M) when the sheet bundle image is displayed on the display 113. The height of the sheet bundle (M) is calculated by multiplying the sheet number count by the above-mentioned coefficient P. When the height of the sheet bundle includes a decimal value as a result of the calculation, the value is rounded up to an integer value.

After the height of the sheet bundle (M) is calculated, the controller 111 displays the sheet bundle image representing the sheet bundle (M) with a second display color (Step S511). In this manner, the sheet bundle image representing the sheet bundle (M) corresponding to the designated image forming job is displayed with the second display color. After the sheet bundle image is displayed with the second display color (Step S511), the controller 111 determines whether or not all pieces of sheet bundle information in the sheet bundle information list of the tray information N have been verified (Step S512). When all pieces of sheet bundle information have been verified (Step S512: Y), the processing proceeds to Step S514. When the verification of all pieces of sheet bundle information is not finished yet (Step S512: N), the controller 111 adds 1 to the variable M, and the processing returns to Step S508.

In Step S514, the controller 111 determines whether or not all pieces of tray information in the received sheet discharge state information have been displayed. When the display of all pieces of tray information is finished (Step S514: Y), the series of processing is ended. When the display of all pieces of tray information is not finished yet (Step S514: N), the controller 111 adds 1 to the variable N, and the processing returns to Step S503.

Now, a method of rendering the sheet bundle image to be displayed in Step S505 is described with reference to FIG. 13A to FIG. 13C. In this case, as an example, description is given of a method of rendering whole sheets on the ejection tray of the large-capacity stacker. A height (h1 of FIG. 13A) of a sheet bundle image 1301 is the height of the whole sheets calculated in Step S504. The sheet bundle image 1301 is rendered by seven points of vertex A to vertex G. In a list 1302 of FIG. 13B, which represents a method of calculating the coordinates of each vertex, the vertex A has tray position coordinates (coordinate values thereof are expressed as (x, y)) in the sheet discharge tray. The tray position coordinates of each sheet discharge tray are stored in the apparatus display information 132 stored in Step S403. The coordinate values of other vertices (B to G) are determined by adding or subtracting a predetermined offset value and the sheet height h1 to or from the coordinate values (x, y) of the vertex A.

The sheet bundle image 1301 is rendered by a rendering command of, for example, scalable vector graphics (SVG). In FIG. 13C, there is shown an example of a rendering command 1303 of the sheet bundle image 1301 at the time when the SVG is used. The shape of the sheet bundle image 1301 differs depending on the shape of the corresponding sheet discharge tray, but the point that the shape is determined based on the tray position coordinates, the predetermined offset value, and the sheet height is the same.

Next, a method of rendering the sheet bundle image to be displayed in Step S511 is described with reference to FIG. 14A to FIG. 14C. In this case, similarly to FIG. 13A to FIG. 13C, as an example, description is given of a method of rendering the sheet bundle image representing the image forming job designated in the ejection tray of the large-capacity stacker. A height (h2 of FIG. 14A) of a sheet bundle image 1401 to be displayed in Step S511 is the height of the sheet bundle calculated in Step S510. The sheet bundle image 1401 is rendered by seven points of vertex H to vertex N. In a list 1402 of FIG. 14B, which represents the method of calculating the coordinates of each vertex, the vertex A corresponds to tray position coordinates (coordinate values thereof are expressed as (x, y)) in the sheet discharge tray. The vertex H is determined based on the vertex A and the rendering start position height s of the sheet bundle calculated in Step S509. The coordinate values of other vertices (I to N) are determined by adding or subtracting a predetermined offset value and the sheet height h2 to or from the coordinate values of the vertex H. In FIG. 14C, there is shown an example of a rendering command 1403 of the sheet bundle image 1401 at the time when the SVG is used. The shape of the sheet bundle image 1401 differs depending on the shape of the corresponding sheet discharge tray, but the point that the shape is determined based on the tray position coordinates, the predetermined offset value, the position to start rendering of the sheet bundle, and the height of the sheet bundle is the same.

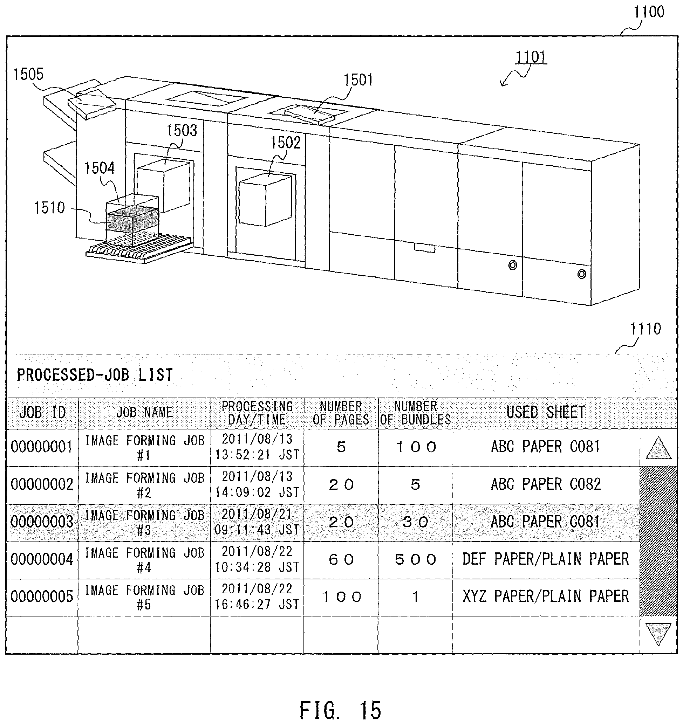

FIG. 15 is an example of a sheet discharge state screen to be displayed on the display 113 of the information processing apparatus 100. In FIG. 15, there are illustrated sheet bundle images 1501 to 1505, which are displayed in Step S505 and represent the sheets stacked on the respective sheet discharge trays. That is, each of the sheet bundle images 1501 to 1505 corresponding to the processed job is mapped to a position of the sheet discharge tray corresponding thereto. A sheet bundle 1510 is a sheet bundle corresponding to the image forming job designated in the list region 1110. In this case, it is shown that a job (job name: image forming job #3) having a job ID of "00000003" is designated, and the sheet bundle corresponding to the designated job is the sheet bundle image 1510. The job ID and the sheet bundle image 1510 are displayed in an emphasized manner with a color different from those of other job IDs and sheet bundle images 1501 to 1505. In this manner, the position of the sheet bundle (sheet bundle image 1510 in the example of FIG. 15) corresponding to the designated processed job can be easily recognized. Alternatively, only the sheet bundle image 1510 corresponding to the designated processed job may be mapped in the system configuration image.

As described above, according to the first embodiment, the position of the sheet bundle corresponding to a predetermined image forming job can be easily identified. Therefore, the sheet bundle corresponding to the processed job can be reliably collected. Further, the sheet stacking states at all discharge destinations can be easily recognized. In this manner, it can be determined which sheet discharge destination is required to be designated for the image forming jobs for which images are formed thereafter to achieve efficiency, and the convenience is enhanced. In particular, when small-lot high-variety image formation is performed, it has been difficult to identify a position of a sheet bundle corresponding to a predetermined image forming job from a large amount of stacked sheets discharged to a plurality of locations in a divided manner, but the identification is facilitated according to the first embodiment.

### Other Embodiment

In the first embodiment, a configuration example in which the information processing apparatus 100 and the image forming apparatus 101 are separate members is described, but the image forming apparatus 101 may have the function of the information processing apparatus 100. That is, the image forming apparatus 101 may include the storage 112, the display 113, and the input portion 114. In this case, the functions of generating the system configuration image and the sheet bundle image are achieved by the controller 121. That is, the controller 121 generates the system configuration image and the sheet bundle image, and combines the generated system configuration image and the generated sheet bundle image to display the result on the display 113. Further, the controller 121 operates as control device for updating the display of the sheet bundle image every time the detection result is received from the sheet presence/absence detection sensor 330 or the like.

Further, in the first embodiment, description is given of an example in which the sheet discharge state information 133 is transmitted to the information processing apparatus 100 every time one sheet bundle image is formed, but this is merely an example. For example, the sheet discharge state information 133 may be transmitted each time a predetermined time period elapses. Further, in the first embodiment, description is given of an example in which the entire sheet discharge state information is transmitted to the information processing apparatus 100, but only the difference from the previously-transmitted sheet discharge state information may be transmitted. Further, in the first embodiment, description is given of an example in which one image forming job is designated in the processed-job list, but a plurality of processed jobs may be simultaneously designated. In this case, the color of the corresponding sheet bundle image may be a color corresponding to each of the processed jobs. Further, in the first embodiment, the coefficient P is used to calculate the height of the sheet bundle, but the value of the coefficient P may also be changed in accordance with the information on the thickness of the sheet so that the height of the sheet bundle is also changed in accordance therewith.

Specifically, a coefficient P that varies depending on the basis weight or the sheet type identified from the sheet ID may be stored in the storage 122, and the height of the sheet bundle and the rendering start height may be calculated by the following calculation method in the above-mentioned processing of Steps S504, S509, and S510. Step S504: (height of sheet bundle of tray N)=(sheet number count of sheet bundle information #1)×(coefficient PI corresponding to sheet ID of sheet bundle information #1)+(sheet number count of sheet bundle information #2)×(coefficient P2 corresponding to sheet ID of sheet bundle information #2)+ ... +(sheet number count of sheet bundle information #(N-1))×(coefficient P(N-1) corresponding to sheet ID of sheet bundle information #(N-1))+(sheet number count of sheet bundle information #N)×(coefficient P(N) corresponding to sheet ID of sheet bundle information #N). Step S509: (rendering start height offset of sheet bundle (M))=(sheet number count of sheet bundle information #1)×(coefficient PI corresponding to sheet ID of sheet bundle information #1)+(sheet number count of sheet bundle information #2)×(coefficient P2 corresponding to sheet ID of sheet bundle information #2)+ ... +(sheet number count of sheet bundle information #(N-1))×(coefficient P(N-1) corresponding to sheet ID of sheet bundle information #(N-1)). Step S510: (height of sheet bundle (M))=(sheet number count of sheet bundle information #M)×(coefficient P(M) corresponding to sheet ID of sheet bundle information #M).

As described above, according to the embodiments, the sheet stacking state is displayed with the sheet bundle image, and hence the sheet stacking state of the sheets before collection can be easily recognized.

The operations described with reference to Figs. 4A - 4G etc., can be achieved by, for example, an application specific integrated circuit (ASIC) or a system-on-a-chip (SoC).

The present disclosure provides a system capable of easily recognizing a stacking state of sheets before collection, and a control apparatus for the system. In an example, an image region in which an entire arrangement configuration of an image forming apparatus and a sheet discharge apparatus is displayed and a list region in which processed jobs are listed are displayed on a monitor screen. In the image region, sheet bundle images corresponding to the processed jobs are mapped at corresponding positions of the sheet discharge tray. One sheet bundle image is an image of a sheet bundle corresponding to an image forming job designated in the list region, and is displayed in an emphasized manner with a color different from that of other sheet bundle images. In this manner, the position of the sheet bundle image corresponding to the designated processed job can be easily recognized.

## Claims

1. A control apparatus to control a system including an image forming apparatus (101) and a sheet discharge apparatus, the control apparatus comprising:
a processor (CPU); and
a memory (ROM, RAM) storing a program which, when executed by the processor, cause the control apparatus to:
receive configuration information of the system,
receive discharge state information for sheets discharged by the sheet discharge apparatus, wherein the discharge state information includes a discharge destination of the sheets and a stacking amount of the sheets,
generate a system configuration image (501) based on the configuration information,
generate a sheet bundle image based on the discharge state information,
map the sheet bundle image at the system configuration image (501) based on the discharge destination,
display, on a display (113), a screen in which the sheet bundle image is mapped to the system configuration image (501), wherein the sheet bundle image is displayed with a size corresponding to the stacking amount, and
receive job identification information of a processed image forming job of sheets to be picked up,
wherein, in the screen, a first sheet bundle image and a second sheet bundle image are distinguishably displayed,
wherein the first sheet bundle image is a sheet bundle image which corresponds to the job identification information,
wherein the second sheet bundle image is a sheet bundle image which does not correspond to the job identification information,
wherein the configuration information includes identification information on the sheet discharge apparatus,
wherein the sheet discharge apparatus includes a stacking tray having a sheet presence/absence detection sensor, and
wherein the control apparatus is configured to update display of the sheet bundle image based on a detection result of the sheet presence/absence detection sensor,
**characterized in that**
the control apparatus is configured to map the sheet bundle image at a sheet stacking portion of the system configuration image (501).

2. The control apparatus according to claim 1, wherein the control apparatus is configured to display, on the display (113), at least one of the system configuration image (501) or the sheet bundle image as one of a two-dimensional image and a three-dimensional image.

3. The control apparatus according to claim 1, wherein the system configuration image (501) includes an image in which an arrangement mode of the image forming system is visualized.

4. The control apparatus according to claim 1,
wherein the sheet discharge apparatus is arranged to be replaceable with another sheet discharge apparatus, and
wherein the configuration information is updated in a case where the sheet discharge apparatus is replaced.

5. The control apparatus according to claim 1, wherein the sheet discharge apparatus includes a stacker having a lift tray and an ejection tray,
wherein the lift tray is positioned at a sheet stacking portion with a predetermined height under a state in which no sheet having the image formed thereon is stacked, and is lowered as stacking proceeds,
wherein the ejection tray is configured to re-stack the sheet having the image formed thereon at a time point at which the lift tray is lowered to a re-stacking position to eject the sheet to an outside of the sheet discharge apparatus, and
wherein the system configuration image (501) includes structure images representing the lift tray and the ejection tray that are displaced in the stacker.

6. The control apparatus according to claim 1, wherein the system further includes an input interface to receive input of at least one image forming job,
wherein the image forming apparatus is configured to form an image on the sheet for each input image forming job,
wherein the sheet discharge apparatus is configured to stack the sheets of the processed job onto a sheet stacking portion to obtain a sheet bundle for each input image forming job, and
wherein the control apparatus is configured to change a mode of displaying the sheet bundle image on the display (113) depending on each input image forming job.

7. The control apparatus according to claim 1, wherein the processor is configured to cause the control apparatus to display a processed-job list together with the sheet discharge state screen.

8. The control apparatus according to claim 1,
wherein the display (113) includes a first display layer and a second display layer present on the first display layer, and
wherein the control apparatus is configured to display the system configuration image (501) in the first display layer, and to display the sheet bundle image in the second display layer.

9. The control apparatus according to claim 1, wherein the display controller is configured to display the first sheet bundle image and the second sheet bundle image with different display colors.

10. A method for a control apparatus to control a system including an image forming apparatus and a sheet discharge apparatus, the method comprising:
receiving configuration information of the system;
receiving discharge state information for sheets discharged by the sheet discharge apparatus, wherein the discharge state information includes a discharge destination of the sheets and a stacking amount of the sheets;
generating a system configuration image (501) based on the configuration information;
generating a sheet bundle image based on the discharge state information;
mapping the sheet bundle image at the system configuration image (501) based on the discharge destination;
displaying, on a display (113), a screen in which the sheet bundle image is mapped to the system configuration image (501), wherein the sheet bundle image is displayed with a size corresponding to the stacking amount; and
receiving job identification information of a processed image forming job of sheets to be picked up,
wherein, in the screen, a first sheet bundle image and a second sheet bundle image are distinguishably displayed,
wherein the first sheet bundle image is a sheet bundle image which corresponds to the job identification information,
wherein the second sheet bundle image is a sheet bundle image which does not correspond to the job identification information,
wherein the configuration information includes identification information on the sheet discharge apparatus,
wherein the sheet discharge apparatus includes a stacking tray having a sheet presence/absence detection sensor, and
the method further comprising
updating display of the sheet bundle image based on a detection result of the sheet presence/absence detection sensor,
**characterized in**
mapping the sheet bundle image at a sheet stacking portion of the system configuration image (501).

11. A non-transitory computer readable storage medium storing a computer program to cause a processor, which is included in a control apparatus according to claim 1 to control a system including an image forming apparatus and a sheet discharge apparatus, to perform a method according to claim 10.

## Patentansprüche

1. Steuervorrichtung für eine Steuerung eines Systems mit einer Bildausbildungsvorrichtung (101) und mit einer Blattentladevorrichtung, wobei die Steuervorrichtung aufweist:
einen Prozessor (CPU), und
einen Speicher (ROM, RAM), der ein Programm speichert, das, wenn durch den Prozessor ausgeführt, die Steuervorrichtung dazu bringt:
Konfigurationsinformation des Systems zu empfangen,
Entladezustandsinformation für durch die Blattentladevorrichtung entladene Blätter zu empfangen, wobei die Entladezustandsinformation ein Entladeziel der Blätter und ein Stapelausmaß der Blätter umfasst,
ein Systemkonfigurationsbild (501) basierend auf der Konfigurationsinformation zu erzeugen,
ein Blattbündelbild basierend auf der Entladezustandsinformation zu erzeugen,
das Blattbündelbild auf das Systemkonfigurationsbild (501) basierend auf dem Entladeziel abzubilden,
auf einer Anzeige (113) einen Bildschirm anzuzeigen, auf das das Blattbündelbild auf dem Systemkonfigurationsbild (501) abgebildet ist, wobei das Blattbündelbild mit einer Größe entsprechend dem Stapelausmaß angezeigt ist, und
Auftragsidentifikationsinformation eines verarbeiteten Bildausbildungsauftrags von aufzusammelnden Blättern zu empfangen,
wobei auf dem Bildschirm ein erstes Blattbündelbild und ein zweites Blattbündelbild unterscheidbar angezeigt sind,
wobei das erste Blattbündelbild ein Blattbündelbild ist, das der Auftragsidentifikationsinformation entspricht,
wobei das zweite Blattbündelbild ein Blattbündelbild ist, das der Auftragsidentifikationsinformation nicht entspricht,
wobei die Konfigurationsinformation Identifikationsinformation bezüglich der Blattentladevorrichtung umfasst,
wobei die Blattentladevorrichtung eine Stapelablage mit einem Blattanwesenheits-/-abwesenheitserfassungssensor umfasst, und
wobei die Steuervorrichtung dazu eingerichtet ist, um eine Anzeige des Blattbündelbilds basierend auf einem Erfassungsergebnis des Blattanwesenheits-/-abwesenheitserfassungssensor zu aktualisieren,
**dadurch gekennzeichnet, dass**
die Steuervorrichtung dazu eingerichtet ist, um das Blattbündelbild bei einem Blattstapelabschnitt des Systemkonfigurationsbilds (501) abzubilden.

2. Steuervorrichtung nach Anspruch 1, wobei die Steuervorrichtung dazu eingerichtet ist, um auf der Anzeige (113) zumindest eines aus dem Systemkonfigurationsbild (501) oder dem Blattbündelbild als eines aus einem Zweidimensionalbild und einem Dreidimensionalbild anzuzeigen.

3. Steuervorrichtung nach Anspruch 1, wobei das Systemkonfigurationsbild (501) ein Bild umfasst, bei dem eine Anordnungsbetriebsart des Bildausbildungssystems visualisiert ist.

4. Steuervorrichtung nach Anspruch 1,
wobei die Blattentladevorrichtung angeordnet ist, um durch eine andere Blattentladevorrichtung ersetzbar zu sein, und
wobei die Konfigurationsinformation in einem Fall aktualisiert ist, in dem die Blattentladevorrichtung ersetzt ist.

5. Steuervorrichtung nach Anspruch 1, wobei die Blattentladevorrichtung eine Stapeleinrichtung mit einer Hebeablage und einer Ausstoßablage umfasst,
wobei die Hebeablage in einem Zustand, in dem kein Blatt, auf dem das Bild ausgebildet ist, gestapelt ist, an einem Blattstapelabschnitt mit einer vorbestimmten Höhe positioniert ist, und mit fortschreitendem Stapeln abgesenkt ist,
wobei die Ausstoßablage dazu eingerichtet ist, um das Blatt, auf dem das Bild ausgebildet ist, zu einem Zeitpunkt neu stapelt, zu dem die Hebeablage zu einer Neustapelposition abgesenkt ist, um das Blatt nach außerhalb der Blattentladevorrichtung auszustoßen, und
wobei das Systemkonfigurationsbild (501) Strukturbilder umfasst, die die Hebeablage und die Ausstoßablage repräsentieren, die in der Stapeleinrichtung versetzt sind.

6. Steuervorrichtung nach Anspruch 1, wobei das System ferner eine Eingabeschnittstelle für einen Empfang einer Eingabe von zumindest einem Bildausbildungsauftrag umfasst,
wobei die Bildausbildungsvorrichtung dazu eingerichtet ist, um ein Bild auf dem Blatt für jeden eingegebenen Bildausbildungsauftrag auszubilden,
wobei die Blattentladevorrichtung dazu eingerichtet ist, um die Blätter des verarbeiteten Auftrags auf einen Blattstapelabschnitt zu stapeln, um ein Blattbündel für jeden eingegebenen Bildausbildungsauftrag zu erlangen, und
wobei die Steuervorrichtung dazu eingerichtet ist, um eine Betriebsart einer Anzeige des Blattbündelbilds auf der Anzeige (113) abhängig von jedem eingegebenen Bildausbildungsauftrag zu ändern.

7. Steuervorrichtung nach Anspruch 1, wobei der Prozessor dazu eingerichtet ist, um die Steuervorrichtung dazu zu bringen, eine Verarbeiteter-Auftrag-Liste zusammen mit dem Blattentladezustandsbildschirm anzuzeigen.

8. Steuervorrichtung nach Anspruch 1,
wobei die Anzeige (113) eine erste Anzeigeebene und eine auf der ersten Anzeigeebene vorhandene zweite Anzeigeebene umfasst, und
wobei die Steuervorrichtung dazu eingerichtet ist, um das Systemkonfigurationsbild (501) in der ersten Anzeigeebene anzuzeigen, und um das Blattbündelbild in der zweiten Anzeigeebene anzuzeigen.

9. Steuervorrichtung nach Anspruch 1, wobei die Anzeigesteuereinrichtung dazu eingerichtet ist, um das erste Blattbündelbild und das zweite Blattbündelbild mit unterschiedlichen Anzeigefarben anzuzeigen.

10. Verfahren für eine Steuervorrichtung für eine Steuerung eines Systems mit einer Bildausbildungsvorrichtung und mit einer Blattentladevorrichtung, wobei das Verfahren aufweist:
ein Empfangen von Konfigurationsinformation des Systems,
ein Empfangen von Entladezustandsinformation für durch die Blattentladevorrichtung entladene Blätter, wobei die Entladezustandsinformation ein Entladeziel der Blätter und ein Stapelausmaß der Blätter umfasst,
ein Erzeugen eines Systemkonfigurationsbilds (501) basierend auf der Konfigurationsinformation,
ein Erzeugen eines Blattbündelbilds basierend auf der Entladezustandsinformation,
ein Abbilden des Blattbündelbilds auf das Systemkonfigurationsbild (501) basierend auf dem Entladeziel,
ein Anzeigen, auf einer Anzeige (113), eines Bildschirms, auf dem das Blattbündelbild auf das Systemkonfigurationsbild (501) abgebildet ist, wobei das Blattbündelbild mit einer Größe entsprechend dem Stapelausmaß angezeigt wird, und
ein Empfangen von Auftragsidentifikationsinformation eines verarbeiteten Bildausbildungsauftrags von aufzusammelnden Blättern,
wobei auf dem Bildschirm ein erstes Blattbündelbild und ein zweites Blattbündelbild unterscheidbar angezeigt werden,
wobei das erste Blattbündelbild ein Blattbündelbild ist, das der Auftragsidentifikationsinformation entspricht,
wobei das zweite Blattbündelbild ein Blattbündelbild ist, das der Auftragsidentifikationsinformation nicht entspricht,
wobei die Konfigurationsinformation Identifikationsinformation bezüglich der Blattentladevorrichtung umfasst,
wobei die Blattentladevorrichtung eine Stapelablage mit einem Blattanwesenheits-/-abwesenheitserfassungssensor umfasst, und
wobei das Verfahren ferner aufweist
ein Aktualisieren einer Anzeige des Blattbündelbilds basierend auf einem Erfassungsergebnis des Blattanwesenheits-/- abwesenheitserfassungssensors,
**gekennzeichnet durch**
ein Abbilden des Blattbündelbilds bei einem Blattstapelabschnitt des Systemkonfigurationsbilds (501).

11. Nicht-transitorisches computerlesbares Speichermedium, das ein Computerprogramm speichert, um einen Prozessor, der in einer Steuervorrichtung nach Anspruch 1 enthalten ist, dazu zu bringen, ein System mit einer Bildausbildungsvorrichtung und mit einer Blattentladevorrichtung zu steuern, um ein Verfahren nach Anspruch 10 durchzuführen.

## Revendications

1. Appareil de commande pour commander un système comprenant un appareil de formation d'image (101) et un appareil de décharge de feuilles, l'appareil de commande comprenant :
un processeur (CPU) ; et
une mémoire (ROM, RAM) maintenant un programme qui, lorsqu'il est exécuté par le processeur, amène l'appareil de commande à :
recevoir des informations de configuration du système,
recevoir des informations d'état de décharge de feuilles déchargées par l'appareil de décharge de feuilles, où les informations d'état de décharge comprennent une destination de décharge des feuilles et une quantité d'empilement des feuilles,
générer une image de configuration de système (501) sur la base des informations de configuration,
générer une image de liasse de feuilles sur la base des informations d'état de décharge,
mapper l'image de liasse de feuilles au niveau de l'image de configuration de système (501) sur la base de la destination de décharge,
afficher, sur un afficheur (113), un écran dans lequel l'image de liasse de feuilles est mappée sur l'image de configuration de système (501), où l'image de liasse de feuilles est affichée avec une taille correspondant à la quantité d'empilement, et
recevoir des informations d'identification de tâche d'une tâche de formation d'image traitée de feuilles à prélever,
dans lequel, dans l'écran, une première image de liasse de feuilles et une seconde image de liasse de feuilles sont affichées de manière à pouvoir être différenciées,
dans lequel la première image de liasse de feuilles est une image de liasse de feuilles qui correspond aux informations d'identification de tâche,
dans lequel la seconde image de liasse de feuilles est une image de liasse de feuille qui ne correspond pas aux informations d'identification de tâche,
dans lequel les informations de configuration comprennent des informations d'identification de l'appareil de décharge de feuilles,
dans lequel l'appareil de décharge de feuilles comprend un plateau d'empilement comportant un capteur de détection de présence/absence de feuilles, et
où l'appareil de commande est configuré pour mettre à jour un affichage de l'image de liasse de feuilles sur la base d'un résultat de détection effectuée par le capteur de détection de présence/absence de feuilles,
**caractérisé en ce que**
l'appareil de commande est configuré pour mapper l'image de liasse de feuilles au niveau d'une partie d'empilement de feuilles de l'image de configuration de système (501).

2. Appareil de commande selon la revendication 1, où l'appareil de commande est configuré pour afficher, sur l'afficheur (113), au moins l'une de l'image de configuration de système (501) et de l'image de liasse de feuilles en tant que l'une d'une image bidimensionnelle et d'une image tridimensionnelle.

3. Appareil de commande selon la revendication 1, dans lequel l'image de configuration de système (501) comprend une image dans laquelle est visualisé un mode d'agencement du système de formation d'image.

4. Appareil de commande selon la revendication 1,
dans lequel l'appareil de décharge de feuilles est conçu pour pouvoir être remplacé par un autre appareil de décharge de feuilles, et
dans lequel les informations de configuration sont mises à jour dans un cas dans lequel l'appareil de décharge de feuilles est remplacé.

5. Appareil de commande selon la revendication 1, dans lequel l'appareil de décharge de feuilles comprend un dispositif d'empilement comprenant un plateau élévateur et un plateau d'éjection,
dans lequel le plateau élévateur est positionné au niveau d'une partie d'empilement de feuilles avec une hauteur prédéterminée dans un état dans lequel aucune feuille comportant l'image formée sur cette dernière n'est empilée, et est abaissé lors de la mise en œuvre d'un empilement,
dans lequel le plateau d'éjection est configuré pour empiler à nouveau la feuille comportant l'image formée sur cette dernière à un instant auquel le plateau élévateur est abaissé à une position de nouvel empilement pour éjecter la feuille vers l'extérieur de l'appareil de décharge de feuilles, et
dans lequel l'image de configuration de système (501) comprend des images de structure représentant le plateau élévateur et le plateau d'éjection qui sont déplacés dans le dispositif d'empilement.

6. Appareil de commande selon la revendication 1, dans lequel le système comprend en outre une interface d'entrée servant à recevoir une entrée d'au moins une tâche de formation d'image,
dans lequel l'appareil de formation d'image est configuré pour former une image sur la feuille pour chaque tâche de formation d'image entrée,
dans lequel l'appareil de décharge de feuilles est configuré pour empiler les feuilles de la tâche traitée sur une partie d'empilement de feuilles de façon à obtenir une liasse de feuilles pour chaque tâche de formation d'image entrée, et
où l'appareil de commande est configuré pour changer un mode d'affichage de l'image de liasse de feuilles sur l'afficheur (113) en fonction de chaque tâche de formation d'image entrée.

7. Appareil de commande selon la revendication 1, dans lequel le processeur est configuré pour amener l'appareil de commande à afficher une liste de tâches traitées conjointement avec l'écran d'état de décharge de feuilles.

8. Appareil de commande selon la revendication 1,
dans lequel l'afficheur (113) comprend une première couche d'affichage et une seconde couche d'affichage présente sur la première couche d'affichage, et
où l'appareil de commande est configuré pour afficher l'image de configuration de système (501) dans la première couche d'affichage, et pour afficher l'image de liasse de feuilles dans la seconde couche d'affichage.

9. Appareil de commande selon la revendication 1, dans lequel l'organe de commande d'affichage est configuré pour afficher la première image de liasse de feuilles et la seconde image de liasse de feuilles avec des couleurs d'affichage différentes.

10. Procédé destiné à un appareil de commande pour commander un système comprenant un appareil de formation d'image et un appareil de décharge de feuilles, le procédé comprenant les étapes consistant à :
recevoir des informations de configuration du système ;
recevoir des informations d'état de décharge de feuilles déchargées par l'appareil de décharge de feuilles, où les informations d'état de décharge comprennent une destination de décharge des feuilles et une quantité d'empilement des feuilles ;
générer une image de configuration de système (501) sur la base des informations de configuration ;
générer une image de liasse de feuilles sur la base des informations d'état de décharge ;
mapper l'image de décharge de feuilles au niveau de l'image de configuration de système (501) sur la base de la destination de décharge ;
afficher, sur un afficheur (113), un écran dans lequel l'image de liasse de feuilles est mappée sur l'image de configuration de système (501), où l'image de liasse de feuilles est affichée avec une taille correspondant à la quantité d'empilement ; et
recevoir des informations d'identification de tâche de formation d'image traitée de feuilles à prélever,
dans lequel, dans l'écran, une première image de liasse de feuilles et une seconde image de liasse de feuilles sont affichées de façon à pouvoir être différenciées,
dans lequel la première image de liasse de feuille est une image de liasse de feuilles qui correspond aux informations d'identification de tâche,
dans lequel la seconde image de liasse de feuilles est une image de liasse de feuille qui ne correspond pas aux informations d'identification de tâche,
dans lequel les informations de configuration comprennent des informations d'identification de l'appareil de décharge de feuilles,
dans lequel l'appareil de décharge de feuilles comprend un plateau d'empilement comportant un capteur de détection de présence/absence de feuilles, et
le procédé comprenant en outre l'étape consistant à
mettre à jour l'affichage de l'image de liasse de feuilles sur la base d'un résultat de détection effectuée par le capteur de détection de présence/absence de feuilles,
**caractérisé par** l'étape consistant à
mapper l'image de liasse de feuilles au niveau d'une partie d'empilement de feuilles de l'image de configuration de système (501).

11. Support d'informations non transitoire lisible par ordinateur contenant en mémoire un programme informatique destiné à amener un processeur, qui est compris dans un appareil de commande selon la revendication 1 destiné à commander un système comprenant un appareil de formation d'image et un appareil de décharge de feuilles, à mettre en œuvre un procédé selon la revendication 10.
